Europäisches Patentamt

European Patent Office

Office européen des brevets

(19)

(11) Publication number: **0 171 997**
**A1**

(12) # EUROPEAN PATENT APPLICATION

(21) Application number: **85305626.5**

(22) Date of filing: **08.08.85**

(51) Int. Cl.⁴: **H 04 B 1/50**

(30) Priority: **09.08.84 GB 8420210**

(43) Date of publication of application:
**19.02.86 Bulletin 86/8**

(84) Designated Contracting States:
**AT BE CH DE FR GB IT LI LU NL SE**

(71) Applicant: **BRITISH TELECOMMUNICATIONS plc**
**British Telecom Centre 81 Newgate Street**
**London EC1A 7AJ(GB)**

(72) Inventor: **Scott, Richard Peter Incledon**
**2 Post Mill Orchard Grundisburgh**
**Woodbridge Suffolk IP13 6UT(GB)**

(74) Representative: **Leng, Francis Edward et al,**
**British Telecom Intellectual Property Unit Room 1304**
**151 Gower Street**
**London EC2V 7AG(GB)**

(54) **Duplex microwave equipment with a single microwave oscillator.**

(57) A microwave communication equipment comprises a frequency modulated microwave transmitter and a superheterodyne receiver. Since the microwave osillator (12) is expensive it is desirable to use the oscillator (12) of the transmitter for frequency change (16) in the receiver but this introduces unwanted modulation into the received signals. This invention adds a cancellation signal (23, 24, 26) into the received signals so as to cancel the unwanted send-baseband introduced in the first frequency change. The output of a discriminator (20) passes to a correlator (27) which also receives send-baseband from delay (23). The output of correlator (27) adjusts controllable attenuator (25) to adjust the level of modulation applied to oscillator (12) and hence the level of unwanted modulation applied via mixer (16). The control loop transfers to microwave oscillator (12) either the modulation stability of VHF oscillator (26) in a preferred embodiment or the demodulation stability of receiver discriminator (20).

EP 0 171 997 A1

./...

Croydon Printing Company Ltd.

FIG.1.

0171997

## DUPLEX MICROWAVE EQUIPMENT WITH
## A SINGLE MICROWAVE OSCILLATOR

BT PATENT CASE 23130 (0052P)

This invention relates to communications equipment which includes a transmitter portion and a receiver portion for sending and receiving radio signals at microwave frequencies.

In such equipment the cost of an oscillator which operates at microwave frequencies is a significant proportion of the whole cost. The transmitter clearly requires one microwave oscillator to generate the carrier. It is convenient to utilise a superheterodyne receiver and a microwave oscillator is needed for the first frequency change (i.e. from received microwave frequency to first intermediate frequency). In the interest of economy it has been proposed to use a single oscillator which is shared by both the transmitter and the receiver. However, in the transmitter, it is conventional to modulate the carrier in the oscillator so that only modulated carrier is available.

It has also been proposed to use this modulated carrier for the first frequency change in the receiver but this results in a first intermediate frequency which contains modulation contributions relating to both send-baseband and receive-baseband. The send-baseband contribution is removed from the received signals by incorporating therein a cancellation signal related to the send-baseband.

It has been demonstrated that this technique is capable of giving satisfactory results provided that the circuits are accurately adjusted. However, it has been found that the adjustment is temperature sensitive,

0171997

especially if different components are at different temperatures. Therefore, even when the cancellation is correctly adjusted for certain conditions, the receive-baseband becomes contaminated with send-baseband when the conditions change.

Equipment of this type is described in an extract which appeared in the IEEE "Journal on Selected Areas in Communications" vol.SAC-1 No.4 published in September 1983. The extract, hereinafter called "the IEEE-extract", comprises a paragraph at page 624 and Figure 4. As well as describing the use of cancellation signals, the IEEE-extract says that local modulation rejection better than 20dB can be achieved by using a correlation loop.

However the transmitter portion of the set is subject to certain disadvantages and in particular the modulation index tends to vary because of the side effects of the AFC (Automatic Frequency Control) and also because of temperature changes affect the performance. It is an object of this invention to improve the modulation performance of the transmitter.

According to this invention, microwave equipment for a duplex microwave communication system includes a transmitter portion comprising a microwave oscillator for producing a modulated microwave carrier and a superheterodyne receiver portion comprising frequency change means connected to the microwave oscillator of the transmitter portion whereby an intermediate frequency having modulation which includes unwanted modulation related to the send-baseband is produced, wherein the equipment also includes cancellation means for introducing a cancellation signal related to the send-baseband into received signals, and correlation means, e.g. a double-balanced mixer, for measuring the amount and polarity of residual unwanted send-baseband signal remaining in received signals characterised in that said correlation means is adapted to vary the index of modulation effected in the transmitter portion.

The receiver portion preferably includes a second frequency change means, i.e. a second local oscillator and mixer, for changing the abovementioned intermediate frequency to a second intermediate frequency which is demodulated. The cancellation signal may be used to modulate the second local oscillator or it may be added to demodulated baseband signals.

In a preferred embodiment, the send-baseband is applied to the oscillator of the transmitter portion via a controllable attenuator (or amplifier) which is connected to the output of the correlation means. The connection is such that when the correlator detects send-baseband in the received signals the level of modulation is decreased (the level of attenuation is increased or the level of amplification is reduced) and when the correlator detects inverted send-baseband the level of modulation is increased.

It will be realised that this arrangement makes the cancellation the master and the modulation the slave. This is the reverse of the arrangement described in the IEEE-article in which the level of cancellation is set to whatever index of modulation is produced by the (uncontrolled) transmitter.

There are substantial advantages in making the cancellation the master. The cancellation operates at a much lower frequency than the microwave transmission and it is preferably implemented in transistors. Thus the cancellation can be implemented with very high stabilities, i.e. substantially higher than at microwave frequency (at least for similar cost). Making the modulation into the slave has the effect of transferring the better stabilities of the low frequency cancellation system into the microwave transmitter portion.

The invention will now be described by way of example with reference to the accompanying drawings in which:-

Figure 1 is a block diagram of a preferred embodiment illustrating the invention applied to a frequency modulated system, and

Figure 2 is a modified version of Figure 1.

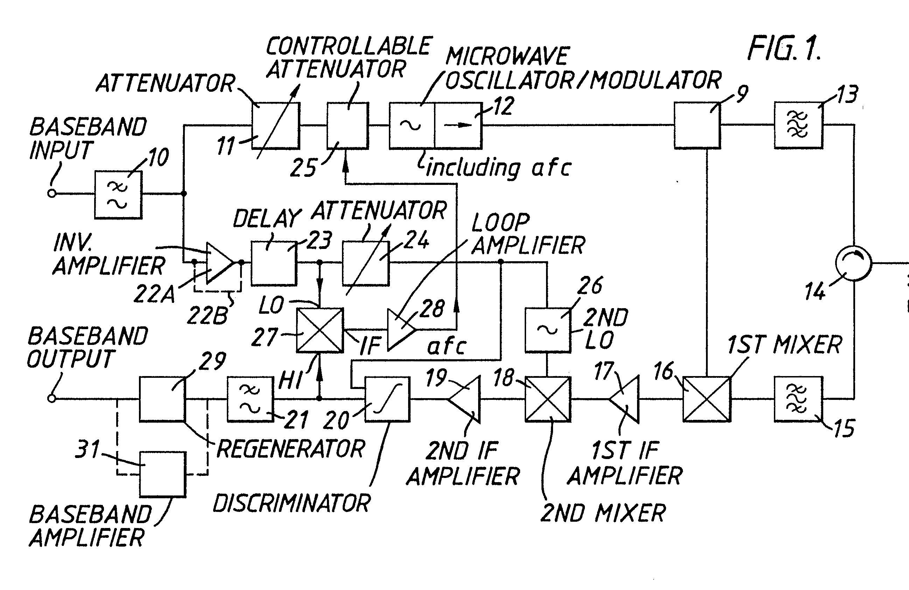

Figure 1 shows communications equipment which includes a microwave transmitter and a microwave receiver which share a microwave oscillator.

The transmitter portion of the equipment comprises low-pass filter 10 for receiving send-baseband and removing any high frequency components. The output of the filter 10 is connected to a microwave oscillator/modulator 12 which includes an AFC feedback loop (not separately indicated) via an attenuator 11 which provides the correct level for modulation. The frequency modulated signals produced by the oscillator 12 pass to an antenna (not shown) via a band pass filter 13 and circulator 14. It will be appreciated that these transmitting arrangements are conventional for microwave communication equipment.

The receiver portion of the equipment comprises a band-pass filter 15 which accepts incoming microwave signals from circulator 14 and provides them to first mixer 16. Mixer 16 is also connected to splitter 9 located between oscillator 12 and filter 13. Thus mixer 16 acts as the first frequency changer (using the modulated output of oscillator 12 to make the change) providing first IF to amplifier 17 and second mixer 18. The second mixer 18 is connected to a VHF oscillator 26 which acts as the second frequency changer providing second IF to frequency discriminator 20. The output of the discriminator 20 is connected via band-pass filter 21 to regenerator 29 when the baseband signal is digital or to baseband amplifier 31 when the baseband signal is analogue. It will be appreciated that the components described above constitute a conventional superheterodyne receiver with two IF stages.

First frequency changer 16 introduces unwanted modulation, namely the modulation applied to the transmitted signals, into the received signals (because the signal used for frequency changing is modulated with the send-baseband). This unwanted modulation is removed by a cancellation means which modulates oscillator 26 with a cancellation signal. The components providing this modulation comprise either an inverting amplifier 22A or a direct connection 22B which have a common input connected to filter 10 and a common output connected to oscillator 26 via delay 23 and attenuator 24.

In other words inverting amplifier 22A and direct connection 22B are selectable alternative configurations. There is a selector switch (not shown), which is used only at installation, to select one of these two alternative configurations for the cancellation means. In the first configuration, inverting amplifier 22A is selected (and direct connection 22B is rejected) whereby the cancellation signal is inverted send-baseband. In the second configuration, the direct connection 22B is selected (and inverting amplifier 22A rejected) whereby the cancellation signal is (non-inverted) send-baseband.

During operation, including the cancellation means, second mixer 18 obtains modulation related to send-baseband in two different forms via two different routes which are constituted as follows:-

|  ROUTE 1           |  ROUTE 2            |
| --- | --- |
| attenuator 11      | invertor    22A or |
| modulator  12      | connector 22B      |
| splitter    9      | delay      23      |
| mixer      16      | attenuator 24      |
| amplifier  17      | oscillator 26      |

Thus second mixer 18 receives unwanted modulation via route 1 and cancellation modulation via route 2. These two modulations will cancel provided that:-

(a)  The cancellation modulation is of the same polarity as the unwanted modulation.

(b)  The two signals are synchronised. Delay 23 is adjusted to achieve this.

(c)  The two signals have equivalent strengths.

(d)  The two signals have similar spectral distributions. The components of routes 1 and 2 can be chosen so that they have no substantial effect on spectral distribution whereby both signals have the same spectral distribution as at the point of separation, i.e. the output of filter 10.

Proviso (a) needs further comment. The equipment may have its transmit frequency higher than its receive frequency or vice versa. Where the receive frequency is the higher, the frequency of the first IF is (receive frequency minus transmit frequency) which implies that the unwanted modulation corresponds to inverted send-baseband. Hence the cancellation signal must correspond to inverted send-baseband and the first configuration, with inverting amplifier 22A, is selected at installation.

In the alternative, the frequency of the first IF is (transmit frequency minus receive frequency). Thus the unwanted modulation is send-baseband and the cancellation signal is also send-baseband. The second configuration, with direct connection 22B, is selected at installation.

The performance of the components is affected by ambient conditions. If the ambient conditions were invariable there would be no problem to adjust attenuator 24 to apply to oscillator 12 the level needed to achieve satisfactory cancellation of the unwanted modulation. However ambient conditions vary and it is an object of this invention to reduce the effect of imbalances arising from this variation and, in particular, to reduce the effect on the transmitter portion.

To achieve this control the equipment includes a correlation means which requires three components. These are a correlator 27 with a LO-port connected to output of delay 23 and a RF-port connected to the output of discriminator 20. The second component is a controllable attenuator 25 which has a control-port connected to the IF-port of correlator 27 via a loop amplifier 28 (which is the third component). The input-port of attenuator 25 is connected to the output of attenuator 11 and the output-port is connected to transmitter oscillator 12.

During use correlator 27 receives as inputs the cancellation signal at its LO-port and demodulated baseband contaminated with a component related to the unwanted modulation at its RF-port. The correlator 27 which is a balanced mixer, mixes its two inputs to produce a low frequency (or DC) component related to the level of the unwanted component. Loop amplifier 28 rejects higher frequency components so that an error signal is passed to variable attenuator 25 which is under the control of the error signal.

If unwanted send-baseband is present in the output of discriminator 20, the control signal from correlator 27 adjusts attenuator 25 to reduce the amount of modulating signal applied to transmitter-oscillator 12. This reduces the amount of unwanted modulation introduced at first mixer 16 to the level at which substantially complete removal is achieved at second mixer 18.

If inverted send-baseband is present in the output of discriminator 20, the control signal adjusts attenuator 25 so as to increase the amount of modulating signal applied to transmitter-oscillator 12. This increases the amount of unwanted modulation introduced at first mixer 16 to the level at which substantially complete removal is achieved at second mixer 18.

It will be appreciated that Figure 1 illustrates an arrangement in which a function which has been considered to relate only to reception now affects both transmission and reception. The reception aspect has just been described. The transmission aspect will now be considered.

In the past it has been regarded as desirable to improve the performance of the microwave transmitter-oscillator 12 to reduce excessive changes in its modulation sensitivity. These improvements have proved difficult to achieve. In the equipment shown in Figure 1 the index of modulation of the transmit oscillator is controlled by the cancellation means of the receiver. Since a VHF oscillator can be implemented in transistors (as opposed to wave guides for a microwave oscillator) it is easier to obtain a stable performance at the lower frequency. The control loop has the effect of transferring the stability of the VHF oscillator 26 and especially the temperature stability of its modulation sensitivity, to the microwave oscillator 12. This is the equivalent of an improved microwave oscillator.

Thus Figure 1 not only removes send-baseband from the received signal but it also improves the performance, e.g. a more stable modulation index, of the transmit portion.

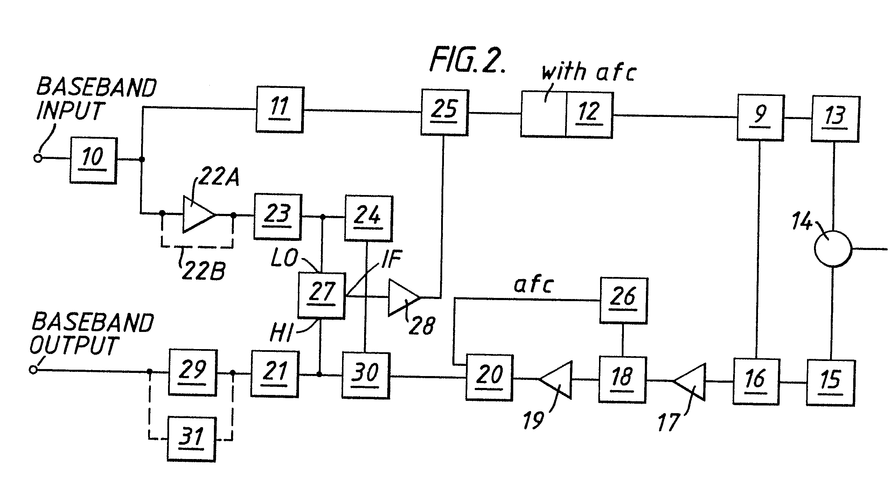

Figure 2 shows an alternative to the arrangement of Figure 1. The alternative uses substantially the same arrangement. The components have the same numbers and the description of similar parts will not be repeated.

The difference resides in the utilisation of the cancellation signal. The output from attenuator 24 is combined with the output of discriminator 20 by cancellation junction 30, e.g. a summing junction if the relevant signals have opposite polarities and a difference amplifier if they have the same polarities. Correlation control is still applied to the microwave oscillator 12 which thereby achieves the stability of the correction path. Components 18, 19 and 26 are not essential to the operation of this alternative arrangement in which the transmitter-oscillator 12 has transferred to it the stable performance of the discriminator 20 rather than the stable performance of the VHF oscillator 26.

Typical frequencies and bit-rates suitable for the transmitter/receiver are as follows:-

| | |
|---|---|
| Bit rate (send and receive) | 8 MBits/s |
| First Microwave Frequency | 29 GHz |
| Second Microwave Frequency | 29.23 GHz |
| 1st IF (Receiver) | 230 MHz |
| 2nd IF (Receiver) | 70 MHz |
| Local oscillator 26 | 300 MHz |

One station of a link sends on 29 GHz and receives on 29.23 GHz. The co-operating station must receive on 29 GHz and send on 29.23 GHz.

CLAIMS

1. Microwave equipment for a duplex microwave communication system which system includes a transmitter portion comprising a microwave oscillator for producing a modulated microwave carrier and a superheterodyne receiver portion comprising frequency change means connected to the microwave oscillator of the transmitter portion whereby an intermediate frequency having modulation which includes unwanted modulation related to the send-baseband is produced, wherein the equipment also includes cancellation means for introducing a cancellation signal related to the send-baseband into received signals and correlation means for measuring the amount of under or over correction; characterised in that said correlation means is adapted to vary the amount of modulation effected in the transmitter portion so as to achieve cancellation and thereby control the modulation index.

2. Communication equipment according to claim 1, wherein the receiver portion includes a second frequency change means for converting the first intermediate frequency to a second intermediate frequency said second frequency change means comprising a local oscillator for generating a frequency change signal and a mixer for mixing said frequency change signal with the first intermediate frequency, wherein the cancellation means includes means for modulating the local oscillator with cancellation signal.

3. Communication equipment according to claim 2, in which the correlation means is connected to receive as first input, corrected and demodulated signals in the receiver portion and as second input, cancellation signal, wherein the output of the correlation means is

O

connected so as to control the index of modulation effected in the microwave oscillator of the transmitter portion whereby the modulation sensitivity of said oscillator is stabilised to that of the local oscillator and the cancellation is effected at the second frequency change means

4. Communication equipment according to claim 3, wherein the first input of the correlation means is connected to the output of the demodulator.

5. Communication equipment according to claim 1, wherein the cancellation means includes a cancellation junction for combining cancellation signal and demodulated signal.

6. Communication equipment according to claim 5, in which the correlation means is connected to receive as first input, corrected and demodulated signals in the receiver portion and as second input, cancellation signal, wherein the output of the correlation means is connected so as to control the index of modulation effected in the microwave oscillator of the transmitter portion whereby the modulation sensitivity of said oscillator is stabilised to the demodulation sensitivity of the receiver demodulator and the cancellation is effected at the cancellation junction.

7. Communication equipment according to claim 6, wherein the first input of the correlation means is connected to the output of the cancellation junction.

8. Communication equipment according to any one of the preceding claims, in which the correlation means is a double balanced mixer.

FIG.1.

FIG.2.

BASEBAND INPUT

BASEBAND OUTPUT

2/2

0171997

# EUROPEAN SEARCH REPORT

European Patent Office

0171997

Application number

EP 85 30 5626

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 935 533 (S. AMOROSO) * Column 2, line 41 - column 5, line 47; figures 1,2 * | 1 | H 04 B 1/50 |
| Y | --- | 2-8 | |
| Y | DE-B-1 002 805 (TELEFUNKEN) * Column 3, line 20 - column 5, line 17; figure 1 * --- | 2-8 | |
| A | DE-B-1 206 499 (STANDARD ELEKTRIK LORENZ) * Whole document * --- | 1-8 | |
| A | FR-A-1 362 913 (PATELHOLD) * Whole document * --- | 1-8 | TECHNICAL FIELDS SEARCHED (Int. Cl.4) |
| A | IEE, CONFERENCE ON COMMUNICATIONS EQUIPMENT AND SYSTEMS, 20th-22nd April 1982, pages 127-130, Hitchin, GB; S.V. JUDD: "Common channel communications" * Page 127, part: RF/IF Cancellation; figure 3 * --- | 1 | H 04 B |
| A | GB-A-2 005 113 (SIEMENS) * Page 2, lines 51-93; figure 3 * --- | 1-8 | |
| A | US-A-3 925 729 (S. AMOROSO) * Abstract; figure 1 * --- -/- | 1 | |

The present search report has been drawn up for all claims

| Place of search | Date of completion of the search | Examiner |
|---|---|---|
| THE HAGUE | 14-10-1985 | VAN WEEL E.J.G. |